# EUROPEAN PATENT SPECIFICATION

(11) **EP 0 333 499 B1**
(45) Date of publication and mention of the grant of the patent: **05.10.1994**
(21) Application number: 89302648.4
(22) Date of filing: 17.03.1989
(51) Int. Cl.: C08F 2/14, C08F 20/04

(54) **Polymerisation processes and products obtained from these**
Polymerisationsverfahren und daraus erhaltene Produkte
Procédés de polymérisation et produits obtenus à partir de ceux-ci

(30) Priority: 18.03.1988 GB 8806537; 18.03.1988 GB 8806539; 18.03.1988 GB 8806540
(43) Date of publication of application: 20.09.1989
(73) Proprietor: ALLIED COLLOIDS LIMITED, Bradford, West Yorkshire BD12 0JZ (GB)
(72) Inventor: Allen, Adrian Swinburn, Skipton North Yorkshire (GB); Flesher, Peter, Bingley West Yorkshire (GB)
(74) Representative: Lawrence, Peter Robin Broughton

(56) References cited:
- EP-A- 0 135 842

## Description

Numerous ways of making polymers from ethylenically unsaturated monomers are used in commercial practice. Examples are organic and aqueous solution polymerisation, gel polymerisation, reverse phase polymerisation, oil-in-water emulsion polymerisation and precipitation polymerisation. Other processes have been proposed in the literature but have proved unsuccessful in commercial practice. An example is dispersion polymerisation, for instance as described in GB 1,123,611. That process is described therein for the production of water insoluble and non-swellable polymers, and according to page 49 of "Science and Technology of Polymer Colloids" Volume 1 dispersion polymerisation has not provided a commercially useful product of polyacrylamide or polyacrylic acid. Indeed, we are unaware of it being used commercially for the successful manufacture of any polymer.

Associative polymers are a particular type of water soluble or water swellable polymer. They are described in, for instance EP 172025, 172723 and 216479, and the prior art discussed in these. They are formed from 1 to 100% by weight associative monomer, which is an ethylenically unsaturated monomer carrying a pendant group generally of the formula -BₙR where n is an integer of 0 to 100, often 2 to 100, B is ethoxy and R is a hydrophobic group of at least 8 carbon atoms, and 0 to 99% by weight other ethylenically unsaturated monomers, for instance acrylic acid alone or in combination with other monomers such as ethyl acrylate. Depending upon the comonomers, the associative polymer may be soluble or swellable in water at a wide range of pH values or only at particular values, e.g., at about pH7 or in aqueous alkali or aqueous acid.

Because of the particular characteristics of associative polymers, many of the known ways of polymerising ethylenically unsaturated monomers have proved unsatisfactory. Nevertheless, as discussed in EP 172025, and the prior art referred to it that, various processes have been described for making associative polymers. In GB 1,167,524, it is mentioned that the polymers can be made by copolymerisation in a liquid which is a solvent for the monomers and a non-solvent for the copolymer. In many of the examples the associative monomer, optionally with another monomer, is dissolved in toluene or other non-aqueous liquid that also contains initiator, and gaseous monomer is passed over the surface, and the polymerisation results in the formation of a slurry or precipitate of polymer particles. Organic solution polymerisation is described in U.S. 4,138,381 and reverse phase polymerisation is described in EP 172724. However the associative monomer is sometimes more soluble in the non-aqueous phase than in the aqueous phase and so classical reverse phase polymerisation, with all the monomer dissolved in the aqueous monomer droplets, may not be appropriate. In U.S. 4,524,175 the reverse phase polymerisation process is modified by including the conventional monomer in aqueous droplets in conventional manner and by including the associative monomer dissolved in the non-aqueous liquid. An oil soluble polymerisation initiator is used.

In practice these processes have not proved successful, and in most instances associative polymer is supplied as an emulsion made by conventional oil-in-water emulsion polymerisation, i.e., by emulsifying all the monomers into water and then polymerising to form an emulsion. Handling and other properties of these emulsions is sometimes rather inconvenient and they normally have a solids content of no more than about 30%. These oil-in-water emulsion processes are, of course, restricted to the use of monomer blends that are insoluble at the pH of the polymerisation process and that produce a polymer that is soluble or swellable at a different pH. The formation of the initial emulsion requires substantially shear energy.

Dispersions of increased concentration are described in EP 172025 but these dispersions are made by, as a first stage, either oil-in-water emulsion polymerisation or reverse phase polymerisation, and also involve azeotroping, which requires substantial energy.

It would be desirable to be able to product stable, relatively concentrated, compositions of water soluble or water swellable associative polymers and which avoids the various disadvantages discussed above for prior art compositions.

According to the invention an associative polymer that is soluble or swellable in aqueous alkali, aqueous acid or water is made by polymerisation of 1 to 100% by weight ethylenically unsaturated associative monomer and 0 to 99% by weight other ethylenically unsaturated monomer in an organic liquid reaction medium that is a solvent for the monomer or monomer blend and is a non-solvent for the polymer, and the process comprises dissolving the monomer or monomer blend in the reaction medium and polymerising the monomer or monomer blend while dissolved in the reaction medium and thereby forming the polymeric particles, and in this process the reaction medium is an organic liquid which includes water in an amount of 4 to 50% by weight monomer or monomer blend, contains polymerisation initiator, and contains dispersion promoter selected from emulsifiers and stabilisers in an amount such that the polymer particles are held in stable dispersion in the reaction medium.

The process differs from the precipitation polymerisation process of GB 1,167,524 by, inter alia, conducting the polymerisation as a dispersion polymerisation, in the presence of a dispersion promoter, instead of conducting it as a precipitation polymerisation.

The process differs from known reverse phase processes for the manufacture of associative polymers as a result of being conducted in the presence of little water, thereby eliminating the energy requirements of initial emulsification and subsequent azeotroping, and also permitting the use of little or no emulsifier. The process differs from the only successful way of making most associative polymers, namely oil-in-water emulsion polymerisation, by being conducted in a continuous phase of a non-aqueous liquid and in the presence of little water.

A composition made by the process of the invention comprises a stable dispersion of particles of water soluble or water swellable associative polymer formed from 1 to 100% ethylenically unsaturated associative monomer and 0 to 99% by weight other ethylenically unsaturated monomer in a non-aqueous liquid containing dispersion promoter selected from emulsifiers and stabilisers. The amount of dispersion promoter is low. Also, when initially made, the amount of water is also very low, namely 4 to 50% by weight polymer.

A preferred process according to the invention comprises forming a solution of the monomer or monomer blend in organic liquid that is wholly miscible with the reaction medium and adding this solution batchwise or continuously to the reaction medium containing initiator and at a temperature such that polymerisation occurs during the addition and thereby forming polymer particles in the presence of the dispersion promoter which stabilises them as a stable dispersion. If non-polymeric emulsifier is present, its amount is usually much less than the amounts required in reverse phase polymerisation processes for the manufacture of associative polymers. Thus it is usually below 10% and often below 5%, e.g., below 2%, based on polymer.

Suitable polymeric stabilisers are amphipathic polymeric stabilisers as described in, for instance, GB 1,482,515 and GB 2,002,400. Condensates of poly-12-hydroxy stearic acid with polyethylene glycol, and copolymers of ethylenically unsaturated hydrophilic monomer with ethylenically unsaturated hydrophobic monomer, are preferred.

The organic, non-aqueous, liquid can be a paraffinic or other hydrocarbon or chlorinated hydrocarbon, for instance being selected from the non-aqueous liquid conventionally used in reverse phase polymerisation processes.

The presence of water in an amount of 4 to 50% by weight monomer or monomer blend in the reaction medium gives improved results. The amount of water must not be so high that there is significant phase separation of aqueous monomer from non-aqueous reaction medium. On prolonged standing some phase separation may occur but in the invention it is necessary that an apparently homogeneous reaction mixture is obtained merely by gentle stirring. Normally the amount of water, during the polymerisation process is below 30%, and preferably below 20%, based on monomer, and the monomer blend then apparently tends to hold the water in homogeneous solution in the reaction medium.

In the invention, it is important that the monomer or monomer blend is dissolved in the reaction medium. The initiator must also be in the reaction medium and so must be soluble in it. Preferably the initiator is an oil soluble initiator, that is to say it is soluble in the non-aqueous liquid of the reaction medium in the absence of the dispersion promoter. It is preferably water insoluble. The initiator is preferably more soluble in the non-aqueous liquid than AZDN. Suitable initiators are 2,2-azobis (methyl butyronitrile) (AZMBN) and 2,2-azobis (2,4-dimethyl valeronitrile).

The monomer or monomer blend may tend to be held in solution in the reaction medium by dispersion promoter but preferably the monomer or monomer blend is also soluble in the organic liquid of the reaction medium, in the absence of the dispersion promoter. Although the monomer must be soluble in the organic liquid of the reaction medium the degree of solubility can be relatively low, e.g., as low as 0.2% if the initiator is, as is preferred, water insoluble since polymerisation will then only occur in the monomer that is in solution at any particular time. Preferably, however, the monomer or monomer blend has a higher solubility, for instance above 2% and preferably above 5%, in the reaction medium.

It is possible that some or all of the solubility of the monomer in the reaction medium is due to micelle formation, with each micelle containing monomer, dispersion promoter and, generally, water.

The amount of dispersion promoter is generally from 3 to 20%, preferably below 15% or 20% and more preferably below 10% by weight of the monomer. Often it is above 3 or 4% by weight of the monomer. The dispersion promoter may comprise non-polymeric emulsifier but preferably the promoter is a polymeric material, that can thus be regarded as a polymeric stabiliser.

Preferably, the monomer or monomer blend is water soluble in the sense that it is more soluble in water than in the non-aqueous liquid since we believe that the polymer particles are then formed from micelles of aqueous monomer and that further aqueous monomer migrates into the polymer particles after they have been precipitated, so that polymerisation continues within the particles after they have been formed.

The amount of polymer in the dispersion is usually at least 30%, e.g., 35 to 60%. Its water content is usually below 24%, generally 4 to 12% of the total dispersion (typically 8 to 25% based on polymer), and the total amount of emulsifier/stabiliser is generally below 10% based on polymer.

The particle size of the associative polymer particles is generally below 10µm, typically in the range 2 to 5µm, but it can be smaller.

The associative monomer can be any of the associative monomers discussed in, for instance, EP 172025, 172723 and 216479, and the prior art discussed in these. It is an ethylenically unsaturated monomer carrying a pendant group that is of the formula BₙR where n is a positive integer, B is ethoxy and R is a hydrophobic group of at least 8 carbon atoms, generally a hydrocarbyl group. n is at least 2, often at least 5, e.g., 10 to 100. Particularly preferred associative monomers are esters formed between an ethoxylated fatty alcohol or alkyl phenol and an ethylenically unsaturated acid, such as acrylic acid, and ethers formed between such an alcohol or phenol and allyl alcohol.

Although the process can be used to form a homopolymer, generally it is used to form a copolymer and any of the comonomers described in EP 172025, 172723 and 216479, and the prior art discussed in those, may be used, in the amounts proposed in those.

The other monomers used in the invention are generally selected from non-ionic and anionic ethylenically unsaturated monomers. Cross linking monomer may be included.

Suitable anionic monomers are acrylic acid and methacrylic acid. Anionic monomers are generally as free acid but optionally as a salt, generally ammonium or amine salt, the amount of salt preferably being not more than 50% of total anionic monomer.

Partial neutralisation (e.g., 3 to 20%), often with ammonia or an amine, may be desirable when the dispersion promoter is very hydrophilic in order to increase the stability of the dispersion.

Since the monomer must be soluble in the reaction medium, any acid monomers are generally used in free acid form so as to aid their solubility in the non-aqueous liquid, and may be present as blends with third or fourth monomers that are more soluble in the non-aqueous liquid.

The preferred monomer blend is 5 to 50%, often 5 to 30%, by weight associative monomer, 5 to 50% (meth) acrylic acid and 0 to 50% non-ionic monomer.

These other monomers are often non-ionic and can be acrylamide or, preferably, an alkyl (meth) acrylate, e.g., ethyl acrylate, styrene or other monomers of the type well known for copolymerisation with (meth) acrylic acid and associative monomer.

The selection of the non-associative monomer will control whether the final polymer is water soluble, alkali soluble or swellable, or acid soluble or swellable, in known manner. For instance if the monomers include methacrylic acid and a water insoluble monomer then the polymer will generally be alkali soluble or swellable. If the monomers include a cationic monomer and a water insoluble water then the polymer will generally be acid soluble or swellable.

The dispersions made in the invention can be used for the same purposes as are described in EP 172025.

After forming the polymer, the free acid groups may be neutralised by reaction with ammonia, amine or an alkali metal compound in water.

The polymer may be linear and, depending on polymerisation conditions, e.g., presence or absence of chain transfer agent, can be of low or, preferably, high molecular weight, e.g., an intrinsic viscosity of 2 to 10, often 4 to 8, dl/g (or higher).

If a cross linked polymer is desired, the monomer blend may include cross linking agent in an amount of 10ppm to 5% based on monomer, usually 50 to 500ppm. Any oil soluble conventional cross linking agent may be used, for instance polyethylenically unsaturated compounds such as methylene bis acrylamide.

The process is preferably conducted by forming a solution of the monomer or monomer blend in organic liquid that is wholly miscible with the reaction medium and adding this solution batchwise or continuously to the reaction medium containing initiator and at a temperature such that polymerisation occurs during the addition. The water may be present initially in the reaction medium but preferably the water is introduced in the initial solution of the monomer in miscible non-aqueous liquid. Usually the non-aqueous liquid of this solution and of the reaction medium is the same material.

### Example 1

A resin pot was charged with 6.3gms of a 60% wt/wt solution in SBP11 of a 50/50 wt/wt mixture of PEG600 and PEG1450 diesters of poly 12-hydroxy stearic acid co-stearic acid oligomer of molecular weight 1200 (stabiliser A), 12.5gms of a 30% wt/wt solution in SBP11 of a 2:1 molar ratio copolymer of ceto-stearyl methacrylate with methacrylic acid (stabiliser B) and 0.14gms of Vazo 52. This mixture was stirred and deoxygenated with nitrogen gas then heated to 70°C and a monomer solution was fed in over 4 hours comprising 25gms of acrylic acid 5.0gms of the allyl ether of a 10 mole ethoxylate of stearyl alcohol, 42.1gms of 32% wt/wt aqueous ammonia solution, 112.3gms of Exsol D100, 6.3gms of stabiliser A and 12.3gms of stabiliser B. After all the feed was added the reaction was continued for a further 1 hour at 70°C. The product was a stable slightly viscous microdispersion of a copolymer content 40% by weight having an average particle size of 2.5µm.

To 100gms of this product was added 10gms of a 5 mole ethoxylated nonyl phenol. Enough of this activated product was added to a 0.5% aqueous ammonia solution to give a paste of viscosity of 20,000mPas (cps) (Brookfield Spindle 6 10rpm). This required 1.7% on weight of paste of copolymer. To this paste was added 8% black pigment dispersion and 12% of a binder latex and the viscosity dropped to 19,000mPas (cps). This paste was used to print a 50/50 polyester/cotton fabric which resulted in a print of excellent colour yield and definition.

## Claims

1. A process of making a stable dispersion in a reaction medium of an associative polymer that is insoluble in that reaction medium but that is soluble or swellable in aqueous alkali, aqueous acid or water, and that is formed from a monomer or monomer blend that consists of 1 to 100% ethylenically unsaturated associative monomer and 0 to 99% by weight other ethylenically unsaturated monomer, characterised in that the associative monomer carries a pendant group of the formula -BnR where n is a positive integer of at least 2 and B is ethoxy and R is a hydrocarbyl group of at least 8 carbon atoms, the monomer or monomer blend is soluble in the reaction medium, the process comprises dissolving the monomer or monomer blend in the reaction medium and polymerising the monomer or monomer blend while dissolved in the reaction medium and thereby forming the polymer particles, and the reaction medium in which the associative polymer is insoluble is an organic liquid that includes water in an amount of 4 to 50% (by weight monomer or monomer blend) and contains polymerisation initiator, and contains dispersion promoter selected from emulsifiers and stabilisers in an amount such that the polymer particles are held in stable dispersion in the reaction medium.

2. A process according to claim 1 conducted by forming a solution of the monomer or monomer blend in an organic liquid that is wholly miscible with the reaction medium and adding this solution batchwise or continuously to the reaction medium containing initiator and at a temperature such that polymerisation occurs during the addition and thereby forming polymer particles in the presence of the dispersion promoter which stabilises them as a stable dispersion.

3. A process according to claim 1 or claim 2 in which the initiator is an oil soluble initiator that is insoluble in water.

4. A process according to any preceding claim in which the monomer or monomer blend is soluble in the organic liquid of the reaction medium in the absence of the dispersion promoter.

5. A process according to any preceding claim in which the amount of dispersion promoter is from 3 to 20% by weight of monomer or monomer blend.

6. A process according to any preceding claim in which the monomer blend is more soluble in water than in the non-aqueous liquid.

7. A process according to any preceding claim in which the amount of polymer in the dispersion is from 35 to 60% by weight and the water content of the dispersion is from 4 to 12% by weight of the dispersion.

8. A process according to any preceding claim in which the said ethylenically unsaturated monomer is selected from anionic and non-ionic monomers.

9. A process according to any preceding claim in which the monomer or monomer blend includes cross linking agent.

## Patentansprüche

1. Verfahren zur Herstellung einer stabilen Dispersion in einem Reaktionsmedium eines assoziativen Polymers, das in diesem Reaktionsmedium unlöslich ist, aber in wäßrigem Alkali, wäßriger Säure oder Wasser löslich oder quellbar ist und das ausgehend von einem Monomer oder einer Monomermischung, die aus 1 bis 100 Gewichts-% ethylenisch ungesättigtem assoziativem Monomer und 0 bis 99 Gewichts-% von anderem ethylenisch ungesättigten Monomer besteht, gebildet wird, dadurch gekennzeichnet, daß das assoziative Monomer eine seitenständige Gruppe der Formel -BnR trägt, worin n eine positive ganze Zahl von mindestens 2 ist und B Ethoxy ist und R eine Kohlenwasserstoffgruppe mit mindestens 8 Kohlenstoffatomen ist, das Monomer oder die Monomermischung im Reaktionsmedium löslich ist, das Verfahren die Auflösung des Monomers oder der Monomermischung im Reaktionsmedium und die Polymerisation des Monomers oder der Monomermischung im im Reaktionsmedium gelösten Zustand umfaßt, wodurch die Polymerteilchen gebildet werden, und das Reaktionsmedium, in dem das assoziative Polymer unlöslich ist, eine organische Flüssigkeit ist, die Wasser in einer Menge von 4 bis 50% (bezogen auf das Gewicht von Monomer oder Monomermischung) einschließt und Polymerisationsinitiator enthält, und Dispersionspromotor, ausgewählt aus Emulgatoren und Stabilisatoren, in einer solchen Menge enthält, daß die Polymerteilchen im Reaktionsmedium in stabiler Dispersion gehalten werden.

2. Verfahren nach Anspruch 1, durchgeführt durch Bildung einer Lösung des Monomers oder der Monomermischung in einer organischen Flüssigkeit, die mit dem Reaktionsmedium vollkommen mischbar ist, und chargenweise oder kontinuierliche Zugabe dieser Lösung zum Initiator enthaltenden Reaktionsmedium und bei einer solchen Temperatur, daß die Polymerisation während der Zugabe auftritt, und dadurch Bildung von Polymerteilchen in der Anwesenheit des Dispersionspromotors, der sie als stabile Dispersion stabilisiert.

3. Verfahren nach Anspruch 1 oder Anspruch 2, in welchem der Initiator ein Öl-löslicher Initiator ist, der in Wasser unlöslich ist.

4. Verfahren nach irgendeinem der vorangehenden Ansprüche, in welchem das Monomer oder die Monomermischung in der organischen Flüssigkeit des Reaktionsmediums in Abwesenheit des Dispersionspromotors löslich ist.

5. Verfahren nach irgendeinem der vorangehenden Ansprüche, in welchem die Menge an Disperionspromotor 3 bis 20 Gewichts-% des Monomers oder der Monomermischung beträgt.

6. Verfahren nach irgendeinem vorangehenden Anspruch, in welchem die Monomermischung in Wasser löslicher ist als in der nicht-wäßrigen Flüssigkeit.

7. Verfahren nach irgendeinem vorangehenden Anspruch, in welchem die Menge an Polymer in der Dispersion 35 bis 60 Gewichts-% beträgt und der Wassergehalt der Dispersion 4 bis 12 Gewichts-% der Dispersion beträgt.

8. Verfahren nach irgendeinem vorangehenden Anspruch, in welchem das ethylenisch ungesättigte Monomer aus anionischen und nicht-ionischen Monomeren ausgewählt wird.

9. Verfahren nach irgendeinem vorangehenden Anspruch, in welchem das Monomer oder die Monomermischung Vernetzungsmittel einschließt.

## Revendications

1. Procédé de préparation d'une dispersion stable dans un milieu réactionnel d'un polymère d'association qui est insoluble dans ce milieu réactionnel mais qui est soluble ou susceptible de gonfler dans une base aqueuse, dans un acide aqueux ou dans de l'eau et qui est formé à partir d'un monomère ou d'un mélange de monomères qui est constitué par 1 à 100 % d'un monomère d'association éthyléniquement insaturé et par 0 à 99 % en masse d'un autre monomère éthyléniquement insaturé, caractérisé en ce que le monomère d'association porte un groupement pendant de formule -BₙR dans laquelle n est un nombre entier positif supérieur ou égal à 2, B est un groupement éthoxy et R est un groupement hydrocarbyle ayant au moins 8 atomes de carbone, en ce que le monomère ou le mélange de monomères est soluble dans le milieu réactionnel, en ce que le procédé comprend la dissolution du monomère ou du mélange de monomères dans le milieu réactionnel et la polymérisation du monomère ou du mélange de monomères alors qu'il est dissous dans le milieu réactionnel, formant ainsi des particules de polymère, et en ce que le milieu réactionnel, dans lequel le polymère d'association est insoluble, est un liquide organique qui contient de l'eau en une quantité comprise entre 4 et 50 % (en masse du monomère ou du mélange de monomères), qui contient un amorceur de polymérisation et qui contient un agent d'activation de dispersion, choisi parmi des émulsifiants et des stabilisants, en une quantité telle que les particules de polymère sont maintenues en dispersion stable dans le milieu réactionnel.

2. Procédé selon la revendication 1, mis en oeuvre en formant une solution du monomère ou du mélange de monomères dans un liquide organique qui est totalement miscible avec le milieu réactionnel et en ajoutant cette solution en discontinu ou en continu au milieu réactionnel contenant un amorceur, et à une température telle que la polymérisation a lieu lors de l'addition, et formant ainsi des particules de polymère en présence de l'agent d'activation de dispersion qui les stabilise en une dispersion stable.

3. Procédé selon la revendication 1 ou la revendication 2, dans lequel l'amorceur est un amorceur soluble dans l'huile qui est insoluble dans l'eau.

4. Procédé selon l'une quelconque des revendications précédentes, dans lequel le monomère ou le mélange de monomères est soluble dans le liquide organique du milieu réactionnel en l'absence de l'agent d'activation de dispersion.

5. Procédé selon l'une quelconque des revendications précédentes, dans lequel la quantité d'agent d'activation de dispersion est comprise entre 3 et 20 % en masse du monomère ou du mélange de monomères.

6. Procédé selon l'une quelconque des revendications précédentes, dans lequel le mélange de monomères est plus soluble dans l'eau que dans le liquide non aqueux.

7. Procédé selon l'une quelconque des revendications précédentes, dans lequel la quantité de polymère dans la dispersion est comprise entre 35 et 60 % en masse et la teneur en eau de la dispersion est comprise entre 4 et 12 % en masse de la dispersion.

8. Procédé selon l'une quelconque des revendications précédentes, dans lequel ledit monomère éthyléniquement insaturé est choisi parmi des monomères anioniques et non ioniques.

9. Procédé selon l'une quelconque des revendications précédentes, dans lequel le monomère ou le mélange de monomères contient un agent de réticulation.
